# EUROPÄISCHE PATENTSCHRIFT

(11) **EP 3 020 749 B1**
(45) Veröffentlichungstag und Bekanntmachung des Hinweises auf die Patenterteilung: **30.09.2020**
(21) Anmeldenummer: 15190541.1
(22) Anmeldetag: 20.10.2015
(51) Int. Cl.: C08G 77/08, C08G 77/46

(54) **VERFAHREN ZUR HERSTELLUNG VON PLATIN ENTHALTENDEN ZUSAMMENSETZUNGEN**
METHOD FOR THE PRODUCTION OF COMPOSITIONS CONTAINING PLATINUM
PROCEDE DE FABRICATION DE COMPOSITIONS CONTENANT DU PLATINE

(30) Priorität: 12.11.2014 EP 14192830
(43) Veröffentlichungstag der Anmeldung: 18.05.2016
(73) Patentinhaber: Evonik Operations GmbH, 45128 Essen (DE)
(72) Erfinder: Knott, Wilfried, 45355 Essen (DE); Klein, Klaus-Dieter, 45481 Mülheim an der Ruhr (DE); Dudzik, Horst, 45326 Essen (DE)
(74) Vertreter: Evonik Patent Association

(56) Entgegenhaltungen:
- EP-A2- 0 011 714

## Beschreibung

Die Erfindung betrifft ein Verfahren zur Herstellung von Zubereitungen enthaltend eine oder mehrere einkernige Platinkomplexverbindungen der Formel (X), wie nachfolgend definiert, eine oder mehrere Verbindungen, die Kohlenstoffatome, Wasserstoffatome und mindestens zwei Sauerstoffatome aufweisen, als Verbindung(en) der Verbindungsklasse II, und eine oder mehrere olefinisch ungesättigte Verbindung(en) ausgewählt aus Olefin1 und Olefin2, als Verbindung(en) der Verbindungsklasse III, durch in Kontakt bringen von jeweils mindestens einer Verbindung aus den Verbindungsklassen II und III mit einer oder mehreren zweikemigen Platin (II)-Verbindung(en) als Verbindung(en) der Verbindungsklasse I, welches dadurch gekennzeichnet ist, dass zur Herstellung der Zubereitung in einem ersten Schritt eine Mischung durch Zusammenfügen von zumindest zwei Verbindungen, die aus zwei unterschiedlichen Verbindungsklassen ausgewählt sind, erzeugt wird und in einem nachfolgenden Schritt die im ersten Schritt erhaltene Mischung mit einer oder mehrerer Verbindungen der noch fehlenden Verbindungsklasse versetzt wird, eine Zubereitung, die durch dieses Verfahren erhältlich ist sowie deren Verwendung.

SiC-verknüpfte, organomodifizierte Siloxane, speziell Polyethersiloxane, stellen mit ihrem weit einstellbaren Tensidverhalten eine industriell sehr wichtige Stoffklasse dar. Der etablierte Weg zur Herstellung dieser Substanzen liegt in der Platinmetall-katalysierten Anlagerung SiH-Gruppen tragender Siloxane und Silane an olefinisch funktionalisierte Verbindungen, wie z.B. an Allylpolyether.

Die Verwendung von Platinkatalysatoren für die Anlagerung von Silanen oder Siloxanen mit SiH-Gruppen an Verbindungen mit einer oder mehreren olefinischen Doppelbindungen ist bekannt (Hydrosilylierung) und z.B. in dem Buch "Chemie und Technologie der Silicone", Verlag Chemie, 1960, Seite 43, und in der Patentliteratur, z.B. in der DE-A-26 46 726, der EP-A-0 075 703 und der US-A-3 775 452, beschrieben. In der heutigen betrieblichen Praxis haben sich überwiegend Hexachloroplatinsäure und cis-Diamminoplatin(II)chlorid durchgesetzt.

In jüngerer Zeit häufig eingesetzte Platin-Katalysatoren sind solche vom Karstedt-Typ (US 3 814 730). Diese neigen bei der Herstellung organomodifizierter Siloxane, insbesondere der Allylpolyethersiloxane, zu Desaktivier- und Abschaltphänomenen, so dass sich oft die Notwendigkeit zur Nachkatalyse und/oder auch der drastischen Temperaturanhebung in der Anlagerungsreaktion ergibt.

In der WO-A-98/00463 sind definierte feste Verbindungen mit hohen Zersetzungstemperaturen (144,3 °C und 138,4 °C) beschrieben, die, ausgehend vom Karstedt-Katalysator, durch Zugabe ausgewählter elektronenarmer Olefine ein aktives und zugleich stabiles Katalysatorsystem für die homogene Hydrosilylierung sein sollen. Die erhöhte Aktivität wird auf die Einführung starker π-Säure-Liganden, wie insbesondere Methylnaphthochinon bzw. Tetraethyltetracarboxylatoethylen, zurückgeführt. In den angegebenen Beispielen wird Triethylsilan an Vinyltrimethylsilan angelagert, wobei die Olefinkomponente mit 100 % Überschuss zum Einsatz kommt. Trotz dieses hohen Überschusses und unter Berücksichtigung, dass die Vinylgruppe im Gegensatz zur Allylgruppe nicht isomerisierungsaktiv ist, schaltet hier die Katalyse unter Desaktivierung bei 50 °C nach 2 Stunden ab, wobei der SiH-Umsatz nur 68 % erreicht. Bei 73 °C zersetzt sich dieses Katalysatorsystem sofort und führt nur zu 18 % SiH-Umsatz (P Steffanut et al., Chem. Eur. J. 1998, 4, No. 10, Seite 2014).

In EP 1 520 870 wird ein Katalysator beschrieben, der etliche der genannten Probleme überwindet. Der Katalysator wird dadurch hergestellt, dass Platin⁽⁰⁾-Komplexkatalysatorlösungen, insbesondere solche auf Basis kommerziell erhältlicher Karstedt-Komplexe, mit wirksamen Mengen aktivierender C₂₋₆-Olefinen versetzt werden, bevor diese zur Hydrosilylierungsmatrix gegeben werden und dann die Hydrosilylierung bei moderaten Temperaturen vorzugsweise zwischen ca. 20 °C bis ca. 150 °C durchführt.

In der noch nicht veröffentlichten Anmeldung DE 102014213507.9 wird beschrieben, dass es zur Erzielung lagerstabiler Zubereitungen, insbesondere bei Verwendung von Di-µ-chloro-bis[chloro(cyclohexen)platin(II)] (Pt 92), notwendig ist, dass die Platin-Verbindung mit mindestens einer mindestens zwei Sauerstoffatome aufweisende Verbindung, die auch einen messbaren Gehalt an olefinischer Unsättigung aufweisen, in Kontakt gebracht wird.

Modic beschreibt in US 3.516.946, dass ausgehend von Komplexen des Typs [PtCl₂ Olefin]₂ beziehungsweise H[PtCl₂ Olefin] durch Umsetzung mit einem cyclischen Alkylvinylpolysiloxan der Formel [(CH₂=CH)(R)SiOIₙ unter thermischer Eliminierung und Verdrängung des in den Ausgangskomplexen enthaltenen Olefins zu Katalysatoren gelangt werden kann, die sich vorteilhaft bei der Herstellung von Silikonkautschuken (LSR-Systemen) verwenden lassen. Die Synthese dieser besonderen Katalysatoren ist zeitaufwendig und verlangt selbst im Falle des leicht zu verdrängenden Ethylens eine Reaktion, die bei 60°C über 6 Stunden geführt wird. Im Falle des schwieriger zu substituierenden Cyclohexens sind ebenfalls 6 Stunden aber dann bei 70°C zu veranschlagen. Aus Sicht der betrieblichen Praxis eröffnet diese Methode keinen einfachen und zudem keinen kostengünstigen Zugang zu neuartigen Katalysatorsystemen.

EP 0 011 714 A2 offenbart Verbindungen der Formel (Dien)Platinumdihalid als Katalysatoren für Hydrosilylierungsreaktionen, die in Gegenwart sauerstoffenthaltender und olefinisch ungesättigter Verbindungen durchgeführt werden.

Aufgabe der vorliegenden Erfindung war die Bereitstellung eines einfachen Verfahrens zur Herstellung von möglichst lagerstabilen, eine oder mehrere Platin(II)-Verbindungen enthaltenden Zubereitungen.

Überraschenderweise wurde gefunden, dass das/die in den Ansprüchen sowie der folgenden Beschreibung näher beschriebene Verfahren/Zubereitung diese Aufgabe löst.

Gegenstand der vorliegenden Erfindung ist deshalb ein Verfahren zur Herstellung von Zubereitungen enthaltend eine oder mehrere Platin(II)-Verbindungen, als Verbindung(en) der Verbindungsklasse I, eine oder mehrere Verbindungen, die Kohlenstoffatome, Wasserstoffatome und mindestens zwei Sauerstoffatome aufweisen und gegebenenfalls eine olefinische Unsättigung aufweisen können, als Verbindung(en) der Verbindungsklasse II, und eine oder mehrere mindestens einfach olefinisch ungesättigte, weniger als zwei Sauerstoffatome aufweisende Verbindung(en), als Verbindung(en) der Verbindungsklasse III, welches sich dadurch auszeichnet, dass zur Herstellung der Zusammensetzung in einem ersten Schritt eine Mischung durch Zusammenfügen von zumindest zwei Verbindungen, die aus zwei unterschiedlichen Verbindungsklassen ausgewählt sind, erzeugt wird und in einem nachfolgenden Schritt die im ersten Schritt erhaltene Mischung mit einer oder mehrerer Verbindungen der noch fehlenden Verbindungsklasse versetzt wird.

Ebenfalls Gegenstand der vorliegenden Erfindung eine Zubereitung, die durch dieses Verfahren erhältlich ist, sowie die Verwendung der Zubereitung, vorzugsweise als Katalysator, in einem Verfahren, bei dem H-Si-Gruppen aufweisende Verbindungen mit Verbindungen, die olefinische Doppelbindungen aufweisen, umgesetzt werden.

Die erfindungsgemäßen Zubereitungen haben den Vorteil, dass mit ihnen eine staubfreie Lagerung und Zudosage des häufig giftigen und/oder kanzerogenen Katalysators möglich ist.

Die Zugabe des Katalysators in Form der erfindungsgemäßen Zubereitung hat außerdem den Vorteil, dass ein genaueres Zudosieren des Katalysators zum Reaktionsgemisch möglich ist, da staubförmige Anhaftungen an Rohrleitungen oder Ähnlichem verhindert werden.

Für den Fachmann überraschend ist zur Stabilisierung der erfindungsgemäßen Zubereitungen nur ein geringer molarer Überschuss an Olefin bezogen auf eingesetztes Platin notwendig. So ist zum Beispiel für eine einwöchige Stabilisierung einer 0,6 Gewichtsprozent Platin enthaltenden Zubereitung in Butyldiglykol nur ein Zusatz der doppelten molaren Menge an Cyclohexen bezogen auf die molare Gesamtmenge des aus dem Di-µ-chloro-bis[chloro(cyclohexen)platin(II)] (Pt 92)-stammenden Platins notwendig. Ohne diesen Cyclohexen-Zusatz erleidet die Di-µ-chloro-bis[chloro(cyclohexen)platin(II)] (Pt 92)-Zubereitung in Butyldiglykol bereits nach eintägiger Lagerung unter Lichtauschluß eine Zersetzung unter Platinabscheidung (Beispiel 1).

Je nach verwendeter Platinverbindung kann der Einsatz der erfindungsgemäßen Zubereitung zudem eine Steigerung der Aktivität, sichtbar am früheren Klarpunkt und messbar als SiH-Umsatz als Funktion der Zeit verglichen mit herkömmlichen pulverförmigen Katalysatoren bei Hydrosilylierungsreaktionen bewirken.

Für die Qualität der angestrebten SiC-Verknüpfungsprodukte, insbesondere der Polyethersiloxane, die z.B. Anwendung als Polyurethanschaumstabilisatoren oder als Lackadditive finden, ist der Einsatz der Platin(II)-Verbindungen höherer Wertigkeit enthaltenden Zubereitungen von Vorteil, da bei deren Einsatz in Batchprozessen an der Eingabestelle des Hydrosilylierungsreaktors lokale Überkonzentrationen von Platin vermieden werden, die Ursache unerwünschter Platinabscheidung und von Gelbildungen sein können.

Das erfindungsgemäße Verfahren zur Herstellung der Zubereitungen, die erfindungsgemäßen Zubereitungen und deren erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Das erfindungsgemäße Verfahren zur Herstellung von Zubereitungen enthaltend ein oder mehrere einkernige Platinkomplexverbindungen der Formel (X)

[Olefin1]ₓ[Olefin2]_{y} Pt²⁺ Hal⁻₂

mit Hal = F, Cl, Br oder J, vorzugsweise Cl, Br oder J, bevorzugt Cl, x = 1 oder 2, y = 0 oder 1, Olefin1 = Verbindung, die mindestens eine olefinische Unsättigung, weniger als zwei Sauerstoffatome und vorzugsweise kein Silizium-Atom aufweist, Olefin2 = Verbindung, die eine olefinische Unsättigung, weniger als zwei Sauerstoffatome und vorzugsweise kein Silizium-Atom aufweist, und mit der Maßgabe, dass wenn Olefin1 mindestens zwei olefinische Unsättigungen aufweist x = 1 und x + y = 1 ist und wenn Olefin1 nur eine olefinische Unsättigung aufweist x + y = 2 ist, eine oder mehrere Verbindungen, die Kohlenstoffatome, Wasserstoffatome und mindestens zwei Sauerstoffatome aufweisen und optional eine oder mehrere, vorzugsweise eine olefinische Unsättigung(en) aufweisen, als Verbindung(en) der Verbindungsklasse II, und eine oder mehrere olefinisch ungesättigte Verbindung(en) ausgewählt aus Olefin1 und Olefin2, als Verbindung(en) der Verbindungsklasse III, durch in Kontakt bringen von jeweils einer Verbindung aus den Verbindungsklassen II und III mit einer oder mehreren zweikemigen Platin (II)-Verbindung(en) als Verbindung(en) der Verbindungsklasse I, zeichnet sich dadurch aus, dass zur Herstellung der Zusammensetzung in einem ersten Schritt eine Mischung durch Zusammenfügen von zumindest zwei Verbindungen, die aus zwei unterschiedlichen Verbindungsklassen ausgewählt sind, erzeugt wird und in einem nachfolgenden Schritt die im ersten Schritt erhaltene Mischung mit einer oder mehrerer Verbindungen der noch fehlenden Verbindungsklasse versetzt wird.

Als Verbindungen der Verbindungsklasse III, also als Olefin 2 und Olefin1, welches nur eine olefinische Unsättigung aufweist, können gleiche oder verschiedene Verbindungen, vorzugsweise ausgewählt aus einfach olefinisch ungesättigten Kohlenwasserstoffen mit 2 bis 30 Kohlenstoffatomen, die gegebenenfalls an der olefinischen Doppelbindung neben Wasserstoff weitere Substituenten tragen können, wie z.B. aliphatische, cycloaliphatische und/oder aromatische Reste, Hydroxy-, Hydroxyalkyl-, Silyl- und/oder Siloxanylgruppen, vorhanden sein bzw. eingesetzt werden. Vorzugsweise sind Olefin 2 und Olefin1, welches nur eine olefinische Unsättigung aufweist, ausgewählt aus Allylalkohol, Alkenolen, wie z.B. Butenole, Pentenole, Hexenole, Alkenen, insbesondere Ethylen, Propen, 1-Buten, cis-Buten, trans-Buten, Isobuten, Penten, Hexen, Octen, Nonen, Decen, Undecen, Dodecen, Cyclopenten, Vinylcyclohexan, Allylchlorid, Methallylchlorid, Methallylalkohol, Styrol, α-Methylstyrol, Inden, cis- Stilben, trans-Stilben und 1,1-Diphenylethen. Bevorzugt sind Olefin 2 und Olefin1, welches nur eine olefinische Unsättigung aufweist, Ethylen oder Cyclohexen, wobei es besonders bevorzugt ist, wenn Olefin 2 oder Olefin1, welches nur eine olefinische Unsättigung aufweist, Ethylen ist und es ganz besonders bevorzugt ist, wenn Olefin 2 und Olefin1, welches nur eine olefinische Unsättigung aufweist, Ethylen ist.

Als Olefin1, welches mindestens zwei olefinische Unsättigungen aufweist, können alle Verbindungen vorhanden sein bzw. eingesetzt werden, die mindestens zwei olefinische Unsättigungen aufweisen, die nicht konjugiert vorliegen. Bevorzugt sind die Verbindungen ausgewählt aus 1,5-Cyclooctadien, Norbomadien, 1,3-Divinyl-1,1,3,3-tetramethyldisiloxan, Hexadien-1,5, 1,2-Divinylcyclohexan, 1,2 Divinylbenzol, Dicyclopentadien und Diallylether.

Vorzugsweise wird zur Herstellung der Zubereitung in einem ersten Schritt eine Mischung aus Verbindungen der Verbindungsklassen I und III erzeugt und in einem nachfolgenden Schritt die im ersten Schritt erhaltene Mischung mit Verbindung(en) der Verbindungsklasse II versetzt oder es wird in einem ersten Schritt eine Mischung aus Verbindungen der Verbindungsklassen II und III erzeugt wird und in einem nachfolgenden Schritt die im ersten Schritt erhaltene Mischung mit Verbindung(en) der Verbindungsklasse I versetzt wird.

Bevorzugt wird in dem ersten Schritt keine Mischung erzeugt, die Verbindungen der Verbindungsklassen I und II enthält.

Zur Herstellung der erfindungsgemäßen Zubereitungen sind in den einzelnen Schritten der sequentiellen Herstellung gegebenenfalls Gase, Flüssigkeiten und/oder Feststoffe zu handhaben und zu vermischen. Das Vermischen kann auf jede erdenkliche Weise erfolgen. Vorzugsweise erfolgt ein kurzzeitiger Eintrag mittels gewöhnlicher Rührorgane.

Das erfindungsgemäße Verfahren wird vorzugsweise so durchgeführt, dass eine so große Menge an Verbindungen der Verbindungsklasse I eingesetzt wird, dass der Anteil der Verbindungen der Verbindungsklasse I bezogen auf die Summe der eingesetzten Verbindungen der Verbindungsklassen I, II und III von 0,1 bis 50,0 Gew.-%, vorzugsweise von 0,2 bis 25 Gew.-%, bevorzugt von 0,3 bis 10 Gew.-% und besonders bevorzugt von 0,3 bis 1,0 Gew.-% beträgt.

Die Menge an Verbindungen der Verbindungsklasse III die eingesetzt wird, wird vorzugsweise so gewählt, dass die Zubereitung einen Gehalt an olefinischer Unsättigung von mindestens 0,05 g Jod/ 100 g Zubereitung, entsprechend mindestens 0,002 meq/ g aufweist. Der Gehalt an olefinischer Unsättigung kann iodometrisch oder alternativ durch quantitative ¹H-NMR-Spektroskopie bestimmt werden. Zur Bestimmung des Gehaltes an olefinisch ungesättigten Polyoxyalkylenverbindungen eignet sich zum Beispiel die dem Fachmann geläufige Methode der Jodzahl-Bestimmung nach Hanus, bekannt als Methode DGF C-V 11 a (53) der Deutschen Gesellschaft für Fette. Die Jodzahl nach DGF C-V 11 a (53) gibt die Konzentration an Doppelbindungen in einer definierten Gewichtsmenge eines Stoffes an. Darüber hinaus geeignet ist die ASTM Test-Methode D-2849-69. Insbesondere geeignet für die präzise Bestimmung sehr kleiner Gehalte an olefinisch ungesättigten Gruppen in Polyoxyalkylenen erweist sich die quantitative ¹H-NMR-Spektroskopie, insbesondere, wenn man die zu untersuchende Probe mit einem inneren Standard versieht. Mit hochauflösenden NMR-Geräten können die Gehaltsanteile von den in der Probe enthaltenen olefinisch ungesättigten Gruppen quantitativ bestimmt werden und auch entsprechend als Jodzahl-Äquivalent angegeben werden. Die NMR-Spektroskopie ist eine effiziente Methode zur Charakterisierung metallorganischer Verbindungen wie z.B. den einkernigen Platinkomplexverbindungen der Formel (X). Zur Beschreibung der am Platin gebundenen olefinischen Liganden und deren Bindungsverhältnisse können die ¹H-, die ¹³C- und die ¹⁹⁵Pt-NMR-Spektroskopie herangezogen werden. Mit Hilfe der chemischen Verschiebung kann zwischen freien und gebundenen Liganden unterschieden werden und deren jeweiligen Gehaltsanteile quantifiziert werden. Darüber hinaus können die Platin-Kohlenstoff- bzw. Platin-Wasserstoff-Kopplungen zur eineindeutigen Zuordnung der mit dem Metallzentrum wechselwirkenden π-Liganden dienen.

Die in dem erfindungsgemäßen Verfahren einsetzbaren Verbindungen der Verbindungsklasse II können eine oder mehrere olefinische Unsättigungen aufweisen oder frei von olefinischen Unsättigungen sein. Es können auch Mischungen von Verbindungen der Verbindungsklasse II in dem erfindungsgemäßen Verfahren eingesetzt werden, die Verbindungen der Verbindungsklasse II aufweisen, die eine oder mehrere olefinische Unsättigungen aufweisen, und solche Verbindungen der Verbindungsklasse II aufweisen, die frei von olefinischen Unsättigungen sind. Als Verbindungen der Verbindungklasse II werden in dem erfindungsgemäßen Verfahren vorzugsweise solche der Formel (IV)

A[-O-(CH₂-CHR'-O-)ₘ-(CH₂-CH₂-O-)ₙ--(CH₂-CH(CH₃)-O-)ₒ-Z]ₐ (IV)

mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-Z_{E}, wobei Z_{E} ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder der Rest der Formel -C(=O)-O-Z_{C} ist, wobei Z_{C} ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist,
eingesetzt. Vorzugsweise werden Verbindungen der Formel (IV) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (IV) und (VI).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (IV) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Verbindungsklasse II solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Verbindungsklasse II können bevorzugt solche Verbindungen eingesetzt werden, die aus einer Verbindung der Formel (VI)

A[-OH]ₐ (VI)

hervorgegangen sind, wobei der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate, wobei besonders bevorzugt solche Verbindungen der Formel (VI) eingesetzt werden, bei denen sich der Rest A von einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- oder Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Allylalkohol, Vinylalkohol oder von auf Naturstoffen basierenden, Hydroxylgruppen tragenden Verbindungen ableitet.

Besonders bevorzugt werden als Verbindungen der Verbindungsklasse II solche eingesetzt, die bei einem Druck von 101325 Pa und einer Temperatur von 23 °C flüssig vorliegen. Unter diesen sind Butyldiglykol, Dipropylenglykol und Propylenglykol ganz besonders bevorzugt.

Erfindungsgemäß als Verbindungen der Verbindungsklasse II einsetzbare Verbindungen der Formeln (IV) und Verfahren zu deren Herstellung werden z. B. EP 1 520 870, EP 0 075 703, US 3 775 452 und EP 1 031 603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (IV) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5,158,922 und der EP-A 0 654 302 beschrieben.

Unabhängig vom Herstellungsweg sind Verbindungen der Formel (IV) bevorzugt geeignet, die vorzugsweise eine Polydispersität Mw/Mn von 1,0 bis 1,5 aufweisen, bevorzugt mit einer Polydispersität von 1,0 bis 1,3.

Als Verbindungen der Verbindungsklasse I können in dem erfindungsgemäßen Verfahren alle mindestens zweikemigen Platinkomplexverbindungen eingesetzt werden. Vorzugsweise werden als Verbindungen der Verbindungsklasse I di-µ-Halogenobis(1,2-η)alkenplatin(II)halogenide, bevorzugt di-µ-Chlorobis(1,2-η)alkenplatin(II)chlohde und besonders bevorzugt di-µ-chlorobis(1,2-η)cyclohexenplatin(II)chlorid eingesetzt. Entsprechende Komplexverbindungen sind z. B. von Johnson Matthey oder Heraeus erhältlich. Bei Johnson Matthey heißt der Komplex auch Pt-92 [PtCl₂(cyclohexene)]₂ gem. handbook of pharmaceutical catalysis, Seite 46 (2009), bei Heraeus Di-µ-chloro-bis[chloro(cyclohexene)platinum(II)], CAS 12176-53-3. Bei Alfa Aesar wird Di-µ-chlorodichlorobis(cyclohexene)diplatinum(II) unter CAS 60134-75-0 angeboten.

Werden als Verbindungen der Verbindungsklasse III Verbindungen eingesetzt, die bei einem Druck von 101325 Pa und einer Temperatur von 23 °C gasförmig oder fest vorliegen, wie z.B. Ethylen, Propylen und/oder Buten bzw. trans-Stilben, eingesetzt, kann es vorteilhaft sein, in dem ersten Schritt diese Verbindungen der Verbindungsklasse III mit den Verbindungen der Verbindungklasse II zusammen zu fügen. Werden als Verbindungen der Verbindungsklasse III Verbindungen eingesetzt, die bei einem Druck von 101325 Pa und einer Temperatur von 23 °C flüssig vorliegen, werden diese vorzugsweise im ersten Schritt, vorzugsweise unter Rühren, mit der oder den Verbindungen der Verbindungsklasse I zusammen gegeben.

Die Zugabe der verbleibenden Verbindungsklasse zu der im ersten Schritt erhaltenen Mischung erfolgt vorzugsweise unter Rühren.

Die Reihenfolge dieser Vorgehensweisen ist strikt einzuhalten, da andernfalls durch Platinabscheidung aktivitätsgeminderte und/oder insbesondere auch mehr oder minder gefärbte Platinzubereitungen entstehen können, die durch ihr Aussehen bereits eine mangelnde Lagerstabilität der Zubereitung indizieren.

Die Menge an Verbindungen der Verbindungsklasse III die in dem erfindungsgemäßen Verfahren eingesetzt wird, wird vorzugsweise so gewählt, dass die molare Gesamtmenge an olefinischen Unsättigungen, insbesondere wirksamen olefinischen Unsättigungen (also solchen die nichtkonjugiert sind) in der Zubereitung mindestens doppelt bis 200 mal so groß, bevorzugt mindestens 3 bis 150 mal so groß und ganz besonders bevorzugt mindestens 4 bis 40 mal so groß ist, wie die in der Zubereitung enthaltene molare Gesamtmenge an Platin. Die molare Gesamtmenge an olefinischen Unsättigungen in der Zubereitung ergibt sich aus der Summe der über die Verbindungen der Verbindungsklasse I einbrachten olefinischen Unsättigungen (bei Di-µ-chloro-bis[chloro(cyclohexen)platin(II)] als Verbindung der Verbindungsklasse I der Anteil an Cyclohexen) und der Summe der über die Verbindungen der Verbindungsklasse III einbrachten olefinischen Unsättigungen.

Wie oben ausgeführt ist es erfindungsgemäß möglich, wenn auch weniger bevorzugt, eine oder mehrere Platin(II)-Verbindungen, als Verbindung(en) der Verbindungsklasse I zunächst mit einer oder mehreren Verbindung(en) der Verbindungsklasse II, die keine olefinische Unsättigung aufweisen, zusammenzugeben und hierbei idealerweise zu lösen und dann mit einer oder mehreren, mindestens einfach olefinisch ungesättigten, weniger als zwei Sauerstoffatome aufweisenden Verbindung(en), als Verbindung(en) der Verbindungsklasse III, zu beaufschlagen. Dieses Vorgehen ist weniger bevorzugt, da hierbei vor der Zugabe der olefinisch ungesättigten Verbindung(en) der Verbindungsklasse III ein weniger stabiles, zu Platinausscheidungen neigendes Stoffsystem entsteht (siehe Beispiel 1), das zur Vermeidung derselben möglichst zügig mit einer Verbindung der Verbindungsklasse III beaufschlagt werden muss (Beispiel 7, Zubereitung von Di-µ-chloro-bis[chloro(cyclohexen)platin(II)]- zunächst in Butyldiglykol mit anschließender Ethylen-Beaufschlagung).

Erfindungsgemäß ebenfalls möglich, wenn auch weniger bevorzugt ist eine Vorgehensweise, bei der eine oder mehrere Platin(II)verbindungen als Verbindungen der Verbindungsklasse I zunächst mit einer oder mehreren Verbindung(en) der Verbindungsklasse III nämlich insbesondere den olefinisch ungesättigten Verbindungen, die mindestens eine olefinische Unsättigung und weniger als zwei Sauerstoffatome pro Molekül aufweisen, beaufschlagt und dann mit einer und/oder mehreren Verbindung(en) der Verbindungsklasse II, und hierbei insbesondere solchen, die keine olefinische Unsättigung aufweisen, versetzt wird. Diese weniger bevorzugte Ausführungsform erfährt ihre praktischen Limitierungen unter anderem durch die im Temperaturbereich von 23°C und 40°C vorliegenden Aggregatszustände der aus den Verbindungsklassen I und III zu kombinierenden Komponenten zum Beispiel Pt92 (fest) plus Ethylen (gasförmig) oder auch Pt92 (fest) plus trans-Stilben (fest). Und selbst im Falle der im Temperaturbereich von 23°C und 40°C als Flüssigkeit vorliegenden Verbindungen der Verbindungsklasse III zeigen die experimentellen Beobachtungen, dass die Löslichkeit von Platin(II)Verbindungen vom Typ des Zeise-Salz-Dimeren (zum Beispiel Pt92) in rein olefinisch ungesättigten Verbindungen, die mindestens eine olefinische Unsättigung und weniger als zwei Sauerstoffatome aufweisen und hierbei insbesondere keine Hydroxy- bzw. Hydroxyalkylgruppe verfügen, sehr begrenzt Ist.

Unproblematischer und daher besonders bevorzugt im Sinne der erfinderischen Lehre gestaltet sich hingegen ein Vorgehen, bei dem eine oder mehrere Platin(II)-Verbindungen, als Verbindung(en) der Verbindungsklasse I zunächst mit einer oder mehreren Verbindung(en) der Verbindungsklasse II, die eine olefinische Unsättigung aufweisen, zusammen gegeben wirdt und hierbei idealerweise gelöst wird und dann mit einer oder mehreren mindestens einfach olefinisch ungesättigten, weniger als zwei Sauerstoffatome aufweisenden Verbindung(en), als Verbindung(en) der Verbindungsklasse III, beaufschlagt wird. Durch die Präsenz der olefinischen Unsättigung bereits zum Zeitpunkt des Zubereitung der Vormischung aus Verbindung(en) der Verbindungsklasse I mit einer oder mehreren Verbindung(en) der Verbindungsklasse II scheint dem Stoffsystem die Tendenz zur unerwünschten Platinausscheidung genommen zu sein.

Die erfindungsgemäße Herstellung der erfindungsgemäßen Zubereitungen erfolgt vorzugsweise bei einer Temperatur von 15 bis 60°C, bevorzugt von 25 bis 40°C.

Mit dem erfindungsgemäßen Verfahren können die nachfolgend beschriebenen erfindungsgemäßen Zubereitungen erhalten werden.

Die erfindungsgemäßen Zubereitungen, die eine oder mehrere Platin(II)-Verbindungen, als Verbindung(en) der Verbindungsklasse V, und eine oder mehrere Verbindungen, die Kohlenstoffatome, Wasserstoffatome und mindestens zwei Sauerstoffatome und gegebenenfalls eine oder mehrere olefinische Unsättigungen, bevorzugt keine olefinische Unsättigung aufweisen, als Verbindung(en) der Verbindungsklasse II, und eine oder mehrere olefinisch ungesättigte Verbindung(en), die mindestens eine olefinische Unsättigung und weniger als zwei Sauerstoffatome aufweisen, als Verbindung(en) der Verbindungsklasse III, aufweist, zeichnen sich dadurch aus, dass als Verbindung(en) der Verbindungsklasse V eine oder mehrere Platinkomplexverbindungen der Formel (X)

[Olefin1]ₓ[Olefin2]_{y} Pt²⁺ Hal⁻₂

mit Hal = F, Cl, Br oder J, x = 1 oder 2, y = 0 oder 1, Olefin1 = Verbindung, die mindestens eine olefinische Unsättigung und vorzugsweise kein Silizium-Atom aufweist, Olefin2 = Verbindung, die eine olefinische Unsättigung und vorzugsweise kein Silizium-Atom aufweist, mit der Maßgabe, dass wenn Olefin1 mindestens zwei olefinische Unsättigungen aufweist x = 1 und x + y = 1 ist und wenn Olefin1 nur eine olefinische Unsättigung aufweist x + y = 2 ist, enthalten sind, und mit der Maßgabe, dass die molare Gesamtmenge an olefinischen Unsättigungen, das 2- bis 200-fache, vorzugsweise das 3- bis 150-fache und bevorzugt das 4- bis 40-fache der in der Zubereitung enthaltenen molaren Gesamtmenge an Platin beträgt. Bevorzugte Platinkomplexverbindungen sind solche, die sich aus den oben beschriebenen bevorzugten Ausführungsformen und bevorzugt der Kombination der bevorzugten Ausführungsformen für Hal, x, y, Olefin1 und Olefin2 ergeben. Besonders bevorzugte Zubereitungen sind solche, die Platinkomplexverbindung der Formel (X) enthalten, bei denen Hal = Cl, Olefin1 = Ethylen, Olefin2 = Cyclohexen und x und y = 1 ist. Ist in der erfindungsgemäßen Zubereitung als eine Verbindung mit einer olefinischen Unsättigung Cyclohexen vorhanden, so entspricht der molare Gehalt an Cyclohexen in der Zubereitung mindestens der molaren Platinkonzentration.

Als Verbindungen der Verbindungsklassen II und III sind in der erfindungsgemäßen Zubereitung vorzugsweise die im oben beschriebenen erfindungsgemäßen Verfahren als bevorzugt bezeichneten Verbindungen und Kombinationen dieser bevorzugten Verbindungen vorhanden. Besonders bevorzugte erfindungsgemäße Zubereitungen sind solche, die als Verbindungen der Verbindungsklassen II solche enthalten, die keine olefinische Unsätztigung aufweisen, bevorzugt Butyldiglykol, Dipropylenglykol und/oder Propylenglykol enthalten und als Verbindungen der Verbindungsklassen III Ethylen und/oder Cyclohexen aufweisen.

Bevorzugte erfindungsgemäße Zubereitungen sind solche, die eine Platinkonzentration von 0,1 bis 1,5 Gewichtsprozent und bevorzugt von 0,5 bis 1 Gewichtsprozent Platin bezogen auf die Zubereitung aufweisen.

Bevorzugte erfindungsgemäße Zubereitungen sind solche, die weniger als 5 mol-%, bevorzugt weniger als 0,5 mol-% an elementarem Platin bezogen auf die Gesamtmenge an Platin aufweisen. Besonders bevorzugt sind solche erfindungsgemäßen Zubereitungen, die keine nachweisbaren Mengen an elementarem Platin und/oder Plafin(0)(Komplex-)Verbindungen aufweisen.

Die erfindungsgemäßen Zubereitungen weisen vorzugsweise einen Anteil aller Verbindungen der Verbindungsklasse II und der Verbindungsklasse III an der Gesamtzubereitung von 98,5 bis 99,9 Gew.-%, bevorzugt von 99,0 bis 99,5 Gew.-% auf.

In der erfindungsgemäßen Zubereitung sind die Bestandteile vorzugsweise homogen verteilt. Die Zubereitung kann z. B. in Form einer Lösung, Suspension, Dispersion, Paste oder Salbe vorliegen oder aber aus Gemischen dieser Grenzformen bestehen.

Die erfindungsgemäßen Zubereitungen können in einem Verfahren, bei dem H-Si-Gruppen aufweisende Verbindungen mit Verbindungen, die olefinische Doppelbindungen aufweisen, umgesetzt werden, eingesetzt werden. Vorzugsweise werden die erfindungsgemäßen Zubereitungen dabei als Katalysator bzw. Katalysatorzubereitung eingesetzt. Vorzugsweise ist das Verfahren ein sogenanntes Hydrosilylierungsverfahren. Geeignete SiH-Gruppen aufweisenden Silane oder Siloxane sind z.B. in dem Buch "Chemie und Technologie der Silicone", Verlag Chemie, 1960, beschrieben.

Bei der erfindungsgemäßen Verwendung werden als H-Si-Gruppen tragende Verbindungen vorzugsweise
monomere Silane, wie z.B. R₃SiH; R₂SiH₂; RSiH₃;
cyclische Silane, wie z.B. (RHSiO}₄; (RHSiO}₃;
lineare oder verzweigte oligomere oder polymere Siloxane wie
R₃SiO-(R₂SiO-)ₐ(RSi(H)O-)_{b}SiR₃, wobei a ≥ 0 und b ≥ 1 ist;
HR₂SiO-(R₂SiO-}_{c}(RSi(H)O-)_{d}SiR₂H, wobei c und d ≥ O sind;
Verbindungen der allgemeinen Formel (III) 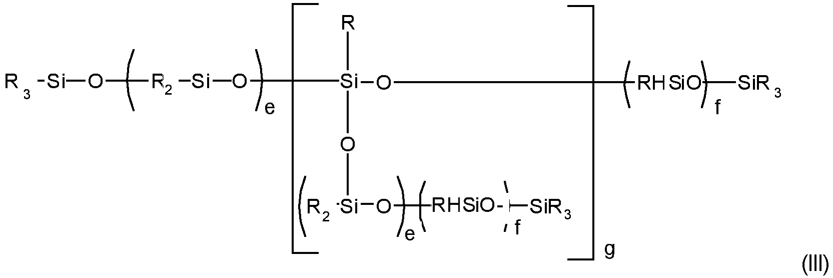 worin
e = ≥ 0,
f = ≥ 1 und
g = ≥ 1 ist,
R gleich oder verschieden Gruppen sind, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe, eingesetzt.

Als Verbindungen mit olefinischen Doppelbindungen werden bei der erfindungsgemäßen Verfahren vorzugsweise Verbindungen der Formeln

CH₂=CH-CH₂-O-(CH₂-CH₂O-)ₓ-CH₂-CH(R')O-)_{y}-(SO)_{z}-R"

CH₂=CH-O-(CH₂CH₂O-)ₓ-CH₂-CH(R')O-)_{y}-R"

CH₂=CH-CH₂-R^{IV}

CH₂=CH-(O)_{x'}-R^{IV}

worin
x= 0 bis 100,
x' = 0 oder 1,
y = 0 bis 100,
z = 0 bis 100,
R' eine gegebenenfalls substituierte Alkylgruppe mit 1 bis 4 C-Atomen ist und
R" einen Wasserstoffrest oder eine Alkylgruppe mit 1 bis 4 C-Atomen; die Gruppe -C(O)-R''' mit R'" = Alkylrest;
die Gruppe -CH₂-O-R'; eine Alkylarylgruppe, wie die Benzylgruppe; die Gruppe -C(O)NH-R' bedeutet,
R^{IV} ein gegebenenfalls substituierter Kohlenwasserstoffrest mit 7 bis 47, vorzugsweise 13 bis 37 C-Atomen,
SO der Rest C₆H₅-CH(-)-CH₂-O-(Styroloxidrest) bedeutet,
eingesetzt.

Bei der erfindungsgemäßen Verwendung wird bevorzugt so viel an der erfindungsgemäßen Zubereitung dem Reaktionsgemisch zugegeben, dass die Menge an Platin von 1 bis 100 wppm (Massen-ppm) bezogen auf das Reaktionsgemisch beträgt.

Die Durchführung des Verfahrens gemäß der erfindungsgemäßen Verwendung kann wie in EP 1520870 A1 beschrieben erfolgen. Insbesondere kann die Durchführung des Verfahrens unter den dort genannten Bedingungen erfolgen.

Die durch erfindungsgemäße Verwendung zugänglichen Verfahren eignen sich z. B. zur Herstellung von SiC-verknüpften Systemen, die Anwendung finden im Bereich der PolyurethanSchaumstabilisatoren (z.B.: Heißweichschaum, Hartschaum, Kaltschaum, Esterschaum, etc.), die Anwendung finden als Trennmittel (Siliconwachse, strahlenhärtende Systeme wie z.B. Siliconacrylate, etc.), die Anwendung finden in Lackadditiven als Entschäumer, Entlüfter, Gleit- und Verlaufsadditive, als Antigraffiti Additive, in Anwendungen von Netzmitteln, in kosmetischen Formulierungen für Verdicker, Emulgatoren, etc.

Die vorliegende Erfindung wird durch die nachfolgenden Beispiele näher erläutert, ohne dass die Erfindung auf diese Beispiele beschränkt sein soll. Dabei werden die in den Beispielen genannten prozentualen SiH-Umsätze indirekt bestimmt, indem das erhaltene Reaktionsprodukt mit Natriumbutylat in n-Butanol behandelt und die Menge noch abspaltbaren Wasserstoffs volumetrisch bestimmt wurde.

### Beispiel 1 (nicht erfindungsgemäß)

Eine Platinmetall-Katalysator-Zubereitung aus Di-µ-chloro-bis[chloro(cyclohexen)platin(II)]- in Butyldiglykol mit einer Platinkonzentration von 0,6 Gew.-% wurde wie folgt erzeugt: In einem mit einem Elastomerseptum verschließbaren Glasgefäß wurden 4,9457 g Butyldigylkol vorgelegt und diese mit (0,0543 g) eines pulverförmigen Di-µ-chloro-bis[chloro(cyclohexen)platin(II)]-Katalysatorkomplexes versetzt. Das Gefäß wurde mit einer Septumkappe hermetisch verschlossen. Durch Schütteln des Gefäßinhaltes erfolgte dessen Homogenisierung. Die Platinmetall-Katalysator-Zubereitung stellte eine klare, leicht gelblich gefärbte Lösung dar.

Ein Teil der Katalysatorzubereitung wurde in Beispiel 2 direkt und ein anderer Teil in Beispiel 3 nach 4 wöchiger Lagerung in dem verschlossenen Glasgefäß unter Lichtausschluss bei 22°C verwendet. Bereits nach eintägiger Lagerung zeigte sich am Boden des Glasgefäßes eine starke Abscheidung feinteiligen, schwarzen Edelmetalls.

### Beispiel 2 (nicht erfindungsgemäß)

In einem 500-ml-Vierhalsrundkolben ausgerüstet mit KPG-Rührer, Rückflußkühler und Innenthermometer wurden 60 g eines seitständigen Wasserstoffsiloxans der allgemeinen Formel: (CH₃)₃Si-(O-Si(CH₃)₂)_{20,5}-(O-SiH(CH₃))₅-O-Si(CH₃)₃, SiH-Wert 2,51 Val/kg
gemeinsam mit 161,3 g eines Polyethers der mittleren Formel CH₂=CH-CH₂O-(C₂H₄O)_{13,5}-(C₃H₆O)_{3,6}-H (Molmasse nach Jodzahl: 824 g/ mol)
unter Rühren vorgelegt und auf 70°C zügig erwärmt. Bei 50°C wurden 4 wppm Platin bezogen auf den Gesamtansatz der unmittelbar zuvor hergestellten Platinmetall-Katalysator-Zubereitung gemäß Beispiel 1 hinzugegeben. Nach zwei Stunden Reaktionszeit lag der gasvolumetrisch bestimmte SiH-Umsatz (ermittelt durch die Zersetzung einer aus dem Reaktionsansatz entnommenen aliquoten Probe durch Zugabe von Natriumbulyatlösung an einer Gasbürette) bei 91,9%. Nach 4 Stunden erreichte der gasvolumetrisch bestimmte SiH-Umsatz 99,3%. Nach Abkühlen auf 22°C wurde ein klares, leicht-gelblich gefärbtes Polyethersiloxan erhalten.

### Beispiel 3 (nicht erfindungsgemäß)

Unter Beibehaltung der in Beispiel 2 genannten experimentellen Parameter wurde eine weitere Hydrosilylierungsreaktion durchgeführt, wobei bei 50°C ein rechnerisch 4 wppm Platin bezogen auf den Gesamtansatz enthaltendes Volumen der zuvor beschriebenen, 4 Wochen gelagerten Platinmetall-Katalysator-Zubereitung gemäß Beispiel 1 hinzufügt wurde. Hierzu wurde das im Septenglasgefäß zuvor abgesetzte, feinteilige Platinmetall aufgewirbelt und dann wurde mit Hilfe einer Spritze ein aliquotes Volumen dieser Suspension entnommen und dem Reaktionsansatz hinzugefügt.

Nach zwei Stunden erreichte die so katalysierte Reaktion einen gasvolumetrisch bestimmten SiH-Umsatz von 11,5%. Nach 4 Stunden lag der gasvolumetrische SiH-Umsatz bei 50,7% und nach 5 Stunden bei 78,1%. Der Ansatz wurde abgebrochen und nach Abkühlen auf 22°C wurde ein stark trübes Reaktionsprodukt isoliert.

### Beispiel 4 (erfindungsgemäß)

Eine Platinmetall-Katalysator-Zubereitung aus Di-µ-chloro-bis[chloro(cyclohexen)platin(II)] in einer Lösung von Ethylen in Butyldiglykol (0,0212 g Ethylen in 5,0 g Butyldiglykol) mit einer Platinkonzentration von 0,6 Gew.-% wurde wie folgt erzeugt: In einem mit einem Elastomerseptum verschlossenen, tarierten Glasgefäß wurden 4,9457 g Butyldiglykol bei 22°C mit Hilfe zweier Injektionsnadeln, dienend als Gas- Ein- und Austritt, mit einem Ethylengasstrom beaufschlagt, so dass sich hierin insgesamt 0,0212 g Ethylen lösten. Nach Entfernen der Septumkappe wurden (0,0543 g) des pulverförmigen Di-µ-chloro-bis[chloro(cyclohexen)platin(II)]-Katalysatorkomplexes zügig hinzugewogen und das Gefäß wurde mit einer neuen Septumkappe hermetisch verschlossen. Durch Schütteln des Gefäßinhaltes erfolgte dessen Homogenisierung. Die Platinmetall-Katalysator-Zubereitung stellte eine klare, homogene leichtgelblich gefärbte Lösung dar.

Ein Teil der Katalysatorzubereitung wurde in Beispiel 5 direkt und ein anderer Teil in Beispiel 6 nach 4 wöchiger Lagerung in dem verschlossenen Glasgefäß unter Lichtausschluss bei 22°C verwendet. Die Platinmetall-Katalysator-Zubereitung stellte auch nach 4 wöchiger Lagerung eine klare, homogene leicht gelblich gefärbte Lösung dar.

### Beispiel 5 (erfindungsgemäß)

In einem 500-ml-Vierhalsrundkolben ausgerüstet mit KPG-Rührer, Rückflußkühler und Innenthermometer wurden 60 g eines seitständigen Wasserstoffsiloxans der allgemeinen Formel: (CH₃)₃Si-(O-Si(CH₃)₂)_{20,5}-(O-SiH(CH₃))₅-O-Si(CH₃)₃, SiH-Wert 2,51 Val/kg
gemeinsam mit 161,3 g eines Polyethers der mittleren Formel CH₂=CH-CH₂O-(C₂H₄O)_{13,5}-(C₃H₆O)_{3,6}-H (Molmasse nach Jodzahl: 824 g/ mol)
unter Rühren vorgelegt und auf 70°C zügig erwärmt. Bei 50°C wurden 4 wppm Platin bezogen auf den Gesamtansatz der unmittelbar zuvor hergestellten Platinmetall-Katalysator-Zubereitung aus Beispiel 4 hinzugegeben.

Nach zwei Stunden Reaktionszeit lag der gasvolumetrisch bestimmte SiH-Umsatz (ermittelt durch die Zersetzung einer aliquoten Probe mit Hilfe von Natriumbutylatlösung an einer Gasbürette) bei 92,6%. Nach 4 Stunden war der gasvolumetrisch bestimmte SiH-Umsatz quantitativ (100%). Nach Abkühlen auf 22°C wurde ein klares, leicht-gelblich gefärbtes Polyethersiloxan erhalten.

### Beispiel 6 (erfindungsgemäß)

Unter Beibehaltung der in Beispiel 5 genannten experimentellen Parameter wurde eine weitere Hydrosilylierungsreaktion durchgeführt, wobei bei 50°C 4 wppm Platin bezogen auf den Gesamtansatz der in Beispiel 4 hier beschriebenen, 4 Wochen gelagerten Platinmetall-Katalysator-Zubereitung hinzufügt wurde. Der unter Verwendung dieser Lösung katalysierte Reaktionsansatz erreicht nach 2 Stunden einen gasvolumetrisch bestimmten SiH-Umsatz von 93,4%. Nach 4 Stunden ist der SiH-Umsatz nahezu quantitativ (99,3%). Nach Abkühlen des Reaktionsansatzes auf 22°C wird ein klares, leicht gelbliches Polyethersiloxan isoliert.

Die erfindungsgemäßen Beispiele zeigen, dass sich mit dem erfindungsgemäßen Verfahren zur Herstellung von Platinmetall-Katalysator-Zubereitung Zubereitungen herstellen lassen, die deutlich lagerstabiler sind als solche Zubereitungen, die mit einem Verfahren gemäß dem Stand der Technik zubereitet wurden.

### Beispiel 7 (erfindungsgemäß)

Analog zu Beispiel 1 wurde eine Platinmetall-Katalysator-Zubereitung aus Di-µ-chloro-bis[chloro(cyclohexen)platin(II)]- in Butyldiglykol mit einer Platinkonzentration von 0,6 Gew.-% wie folgt erzeugt: In einem mit einem Elastomerseptum verschließbaren Glasgefäß wurden 4,9457 g Butyldigylkol vorgelegt und diese mit 0,0543 g eines pulverförmigen Di-µ-chloro-bis[chloro(cyclohexen)platin(II)]-Katalysatorkomplexes versetzt. Das Gefäß wurde mit einer Septumkappe hermetisch verschlossen. Durch Schütteln des Gefäßinhaltes erfolgte dessen Homogenisierung. Die Platinmetall-Katalysator-Zubereitung stellte eine klare, leicht gelblich gefärbte Lösung dar.

1 Stunde später wurde durch die dann immer noch von Platinabscheidungen freie Lösung bei 22°C mit Hilfe zweier Injektionsnadeln, dienend als Gas- Ein- und Austritt, Ethylengas hindurchgeleitet, so dass sich hierin insgesamt 0,0123 g Ethylen lösten.

Ein Teil der Katalysatorzubereitung wurde in Beispiel 8 direkt und ein anderer Teil in Beispiel 9 nach 4 wöchiger Lagerung in dem verschlossenen Glasgefäß unter Lichtausschluss bei 22°C verwendet. Die Platinmetall-Katalysator-Zubereitung stellte auch nach 4 wöchiger Lagerung eine klare, homogene leicht gelblich gefärbte Lösung dar.

### Beispiel 8 (erfindungsgemäß)

In einem 500-ml-Vierhalsrundkolben ausgerüstet mit KPG-Rührer, Rückflußkühler und Innenthermometer wurden 60 g eines seitständigen Wasserstoffsiloxans der allgemeinen Formel: (CH₃)₃Si-(O-Si(CH₃)₂)_{20,5}-(O-SiH(CH₃))₅-O-Si(CH₃)₃, SiH-Wert 2,51 Val/kg
gemeinsam mit 161,3 g eines Polyethers der mittleren Formel CH₂=CH-CH₂O-(C₂H₄O)_{13,5}-(C₃H₆O)_{3,6}-H (Molmasse nach Jodzahl: 824 g/ mol)
unter Rühren vorgelegt und auf 70°C zügig erwärmt. Bei 50°C wurden 4 wppm Platin bezogen auf den Gesamtansatz der der unmittelbar zuvor hergestellten Platinmetall-Katalysator-Zubereitung aus Beispiel 7 hinzugegeben.

Nach zwei Stunden Reaktionszeit lag der gasvolumetrisch bestimmte SiH-Umsatz (ermittelt durch die Zersetzung einer aliquoten Probe mit Hilfe von Natriumbutylatlösung an einer Gasbürette) bei 91,7%. Nach 4 Stunden war der gasvolumetrisch bestimmte SiH-Umsatz quantitativ (100%). Nach Abkühlen auf 22°C wurde ein klares, leicht-gelblich gefärbtes Polyethersiloxan erhalten.

### Beispiel 9 (erfindungsgemäß)

Unter Beibehaltung der in Beispiel 8 genannten experimentellen Parameter wurde eine weitere Hydrosilylierungsreaktion durchgeführt, wobei bei 50°C 4 wppm Platin bezogen auf den Gesamtansatz der in Beispiel 7 hier beschriebenen, 4 Wochen gelagerten Platinmetall-Katalysator-Zubereitung hinzufügt wurde.

Der unter Verwendung dieser Lösung katalysierte Reaktionsansatz erreicht nach 2 Stunden einen gasvolumetrisch bestimmten SiH-Umsatz von 90,4%. Nach 4 Stunden liegt der SiH-Umsatz bei 99,1% und ist nach 5 Stunden quantitativ. Nach Abkühlen des Reaktionsansatzes auf 22°C wird ein klares, leicht gelbliches Polyethersiloxan isoliert.

## Patentansprüche

1. Verfahren zur Herstellung von Zubereitungen enthaltend eine oder mehrere einkernige Platinkomplexverbindungen der Formel (X)
[Olefin1]ₓ[Olefin2]_{y} Pt²⁺ Hal⁻₂
mit
Hal = F, Cl, Br oder J,
x = 1 oder 2,
y = 0 oder 1,
Olefin1 = Verbindung, die mindestens eine olefinische Unsättigung und weniger als zwei Sauerstoffatome aufweist,
Olefin2 = Verbindung, die eine olefinische Unsättigung und weniger als zwei Sauerstoffatome aufweist,
und mit der Maßgabe, dass wenn Olefin1 mindestens zwei olefinische Unsättigungen aufweist x = 1 und x + y = 1 ist und wenn Olefin1 nur eine olefinische Unsättigung aufweist x + y = 2 ist, eine oder mehrere Verbindungen, die Kohlenstoffatome, Wasserstoffatome und mindestens zwei Sauerstoffatome aufweisen, als Verbindung(en) der Verbindungsklasse II,
und eine oder mehrere olefinisch ungesättigte Verbindung(en) ausgewählt aus Olefin1 und Olefin2, als Verbindung(en) der Verbindungsklasse III,
durch in Kontakt bringen von jeweils mindestens einer Verbindung aus den Verbindungsklassen II und III mit einer oder mehreren zweikemigen Platin (II)-Verbindung(en) als Verbindung(en) der Verbindungsklasse I, **dadurch gekennzeichnet, dass** zur Herstellung der Zubereitung in einem ersten Schritt eine Mischung durch Zusammenfügen von zumindest zwei Verbindungen, die aus zwei unterschiedlichen Verbindungsklassen ausgewählt sind, erzeugt wird und in einem nachfolgenden Schritt die im ersten Schritt erhaltene Mischung mit einer oder mehrerer Verbindungen der noch fehlenden Verbindungsklasse versetzt wird.

2. Verfahren nach Anspruch 1, **dadurch gekennzeichnet, dass** zur Herstellung der Zubereitung in einem ersten Schritt eine Mischung aus Verbindungen der Verbindungsklassen I und III erzeugt wird und in einem nachfolgenden Schritt die im ersten Schritt erhaltene Mischung mit Verbindung(en) der Verbindungsklasse II versetzt wird.

3. Verfahren nach Anspruch 1, **dadurch gekennzeichnet, dass** zur Herstellung der Zubereitung in einem ersten Schritt eine Mischung aus Verbindungen der Verbindungsklassen II und III erzeugt wird und in einem nachfolgenden Schritt die im ersten Schritt erhaltene Mischung mit Verbindung(en) der Verbindungsklasse I versetzt wird.

4. Verfahren nach mindestens einem der Ansprüche 1 bis 3, **dadurch gekennzeichnet, dass** in dem ersten Schritt keine Mischung erzeugt wird, die Verbindungen der Verbindungsklassen I und II enthält.

5. Verfahren nach mindestens einem der Ansprüche 1 bis 4, **dadurch gekennzeichnet, dass** der Anteil der Verbindungen der Verbindungsklasse I bezogen auf die Summe der eingesetzten Verbindungen der Verbindungsklassen I, II und III von 0,1 bis 50,0 Gew.-% beträgt.

6. Verfahren nach mindestens einem der Ansprüche 1 bis 5, **dadurch gekennzeichnet, dass** eine Menge an Verbindungen der Verbindungsklasse III eingesetzt wird, dass die Zubereitung einen Gehaltan olefinischer Unsättigung, bestimmt gemäß der in der Beschreibung angegebenen Methode, von mindestens 0,05 g Jod/ 100 g Zubereitung, entsprechend mindestens 0,002 meq/ g beträgt.

7. Verfahren nach mindestens einem der Ansprüche 1 bis 6, **dadurch gekennzeichnet, dass** als Verbindungen der Verbindungklasse II solche der Formel (IV)
A[-O-(CH₂-CHR'-O-)ₘ-(CH₂-CH₂-O-)ₙ--(CH₂-CH(CH₃)-O-)ₒ-Z]ₐ (IV)
mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl, Vinyl- oder Allylgruppe ist, oder
der Rest einer organischen Säure der Formel -C(=O)-Z_{E}, wobei Z_{E} ein organischer Rest, bevorzugt ein linearer oder verzweigter, gesättigter oder ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-Z_{C} ist, wobei Z_{C} ein organischer Rest, bevorzugt ein linearer oder verzweigter, gesättigter oder ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist,
eingesetzt werden.

8. Verfahren nach mindestens einem der Ansprüche 1 bis 7, **dadurch gekennzeichnet, dass** als Verbindungen der Verbindungklasse III Olefine mit 2 bis 6 Kohlenstoffatomen, vorzugsweise Ethen, eingesetzt werden.

9. Verfahren nach mindestens einem der 1 bis 8, **dadurch gekennzeichnet, dass** als Verbindungen der Verbindungsklasse II solche eingesetzt werden, die eine gewichtsmittlere I Molmasse, bestimmt gemäß der in der Beschreibung angegebenen Methode, von 76 bis 10.000 g/mol, bevorzugt von 100 bis 8.000 g/mol und besonders bevorzugt von 200 bis 6.000 g/mol aufweisen.

10. Verfahren nach einem der Ansprüche 1 bis 9, **dadurch gekennzeichnet, dass** als Verbindungen der Verbindungsklasse II solche Verbindungen eingesetzt werden, die aus einer Verbindung der Formel (VI)
A[-OH]ₐ (VI)
hervorgegangen sind, wobei der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate.

11. Verfahren nach Anspruch 10, **dadurch gekennzeichnet, dass** sich der Rest A von einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Allylalkohol, Viylalkohol, Sorbit oder von auf Naturstoffen basierenden, Hydroxylgruppen tragenden Verbindungen ableitet.

12. Verfahren nach mindestens einem der Ansprüche 1 bis 11, **dadurch gekennzeichnet, dass** als Verbindungen der Verbindungsklasse I cis-(NH₃)₂PtCl₂ oder di-µ-Chlorobis(1,2-η)cyclohexenplatin(II)chlorid eingesetzt wird.

13. Zubereitung, die eine oder mehrere Platin(II)-Verbindungen, als Verbindung(en) der Verbindungsklasse IV, und eine oder mehrere Verbindungen, die Kohlenstoffatome, Wasserstoffatome und mindestens zwei Sauerstoffatome und gegebenfalls eine oder mehrere olefinische Unsättigungen aufweisen, als Verbindung(en) der Verbindungsklasse II, und eine oder mehrere olefinisch ungesättigte Verbindung(en), die mindestens eine olefinische Unsättigung und weniger als zwei Sauerstoffatome aufweisen, als Verbindung(en) der Verbindungsklasse III, aufweist, **dadurch gekennzeichnet, dass** als Verbindung(en) der Verbindungsklasse IV Platinkomplexverbindungen der Formel (X)
[Olefin1]ₓ[Olefin2]_{y} Pt²⁺ Hal⁻₂
mit
Hal = F, Cl, Br oder J,
x = 1 oder 2
y = 0 oder 1
Olefin1 = Verbindung, die mindestens eine olefinische Unsättigung und vorzugsweise kein Silizium-Atom aufweist,
Olefin2 = Verbindung, die eine olefinische Unsättigung und vorzugsweise kein Silizium-Atom aufweist,
mit der Maßgabe, dass wenn Olefin1 mindestens zwei olefinische Unsättigungen aufweist x = 1 und x + y = 1 ist und wenn Olefin1 nur eine olefinische Unsättigung aufweist x + y = 2 ist, enthalten sind,
hergestellt gemäß einem Verfahren nach zumindest einem der Ansprüche 1 bis 12,
jeweils mit der Maßgabe, dass die molare Gesamtmenge an olefinisch Unsättigungen das 2- bis 200-fache der in der Zubereitung enthaltenen molaren Gesamtmenge an Platin beträgt.

14. Verwendung einer Zubereitung nach Anspruch 13, vorzugsweise als Katalysator, in einem Verfahren, bei dem H-Si-Gruppen aufweisende Verbindungen mit Verbindungen, die olefinische Doppelbindungen aufweisen, umgesetzt werden.

15. Verwendung nach Anspruch 14, **dadurch gekennzeichnet, dass** in dem Verfahren als H-Si-Gruppen tragende Verbindungen
- monomere Silane, wie z.B. R₃SiH; R₂SiH₂; RSiH₃;
- cyclische Silane, wie z.B. (RHSiO}₄; (RHSiO}₃;
- lineare oder verzweigte oligomere oder polymere Siloxane wie
R₃SiO-(R₂SiO-)ₐ(RSi(H)O-)_{b}SiR₃, wobei a ≥ 0 und b ≥ 1 ist; HR₂SiO-(R₂SiO-}_{c}(RSi(H)O-)_{d}SiR₂H, wobei c und d ≥ O sind;
Verbindungen der allgemeinen Formel (III) 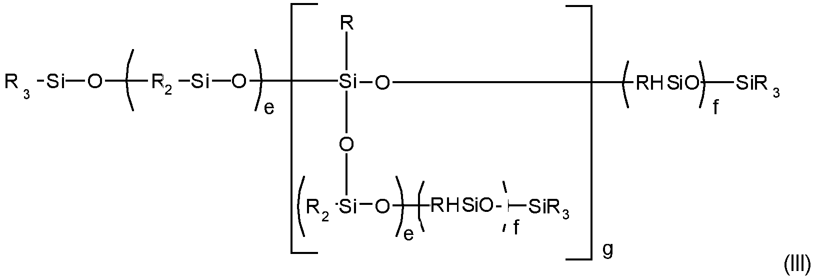 worin
e = ≥ 0,
f = ≥ 1 und
g = ≥ 1 ist,
R gleiche oder verschiedene Gruppen sind, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe, und als Verbindungen mit olefinischen Doppelbindungen Verbindungen der Formeln
CH₂=CH-CH₂-O-(CH₂-CH₂O-)ₓ-CH₂-CH(R")O-)_{y}-(SO)_{z}-R'"
CH₂=CH-O-(CH₂-CH₂O-)ₓ-CH₂-CH(R")O-)_{y}-R'"
CH₂=CH-CH₂-R^{IV}
CH₂=CH-(O)_{x'}-R^{IV}
worin
x= 0 bis 100,
x' = 0 oder 1,
y = 0 bis 100,
z = 0 bis 100,
R" eine gegebenenfalls substituierte Alkylgruppe mit 1 bis 4 C-Atomen ist und
R'" einen Wasserstoffrest oder eine Alkylgruppe mit 1 bis 4 C-Atomen; die Gruppe -C(O)-R^{V} mit R^{V} = Alkylrest;
die Gruppe -CH₂-O-R"; eine Alkylarylgruppe, wie die Benzylgruppe; die Gruppe -C(O)NH-R" bedeutet,
R^{IV} ein gegebenenfalls substituierter Kohlenwasserstoffrest mit 7 bis 47, vorzugsweise 13 bis 37 C-Atomen,
SO der Rest C₆H₅-CH(-)-CH₂-O- (Styroloxidrest) bedeutet,
eingesetzt werden.

16. Verwendung nach Anspruch 14 oder 15, **dadurch gekennzeichnet, dass** so viel an der Zubereitung dem Reaktionsgemisch zugegeben wird, dass die Gesamtkonzentration an Platin von 1 bis 100 wppm bezogen auf das Reaktionsgemisch beträgt.

## Claims

1. Process for producing preparations comprising one or more mononuclear platinum complex compounds of formula (X)
[olefin1]ₓ[olefin2]_{y} Pt²⁺ Hal⁻₂,
where
Hal = F, Cl, Br or I,
x = 1 or 2,
y = 0 or 1,
olefin1 = compound comprising at least one olefinic unsaturation and fewer than two oxygen atoms,
olefin2 = compound comprising an olefinic unsaturation and fewer than two oxygen atoms,
and with the proviso that when olefin1 comprises at least two olefinic unsaturations x = 1 and x + y = 1 and when olefin1 comprises only one olefinic unsaturation x + y = 2,
one or more compounds comprising carbon atoms, hydrogen atoms and at least two oxygen atoms as compound(s) from compound class II,
and one or more olefinically unsaturated compound(s) selected from olefin1 and olefin2 as compound(s) from compound class III,
by contacting at least one compound from each of compound classes II and III with one or more dinuclear platinum (II) compound(s) as compound(s) from compound class I, **characterized in that** it comprises producing the preparation by performing a first step of preparing a mixture by adding together at least two compounds selected from two different compound classes and a subsequent step of admixing the mixture obtained in the first step with one or more compounds of the still absent compound class.

2. Process according to Claim 1, **characterized in that** it comprises producing the preparation by performing a first step of preparing a mixture of compounds from compound classes I and III and a subsequent step of admixing the mixture obtained in the first step with compound(s) from compound class II.

3. Process according to Claim 1, **characterized in that** it comprises producing the preparation by performing a first step of preparing a mixture of compounds from compound classes II and III and a subsequent step of admixing the mixture obtained in the first step with compound(s) from compound class I.

4. Process according to at least one of Claims 1 to 3, **characterized in that** the first step does not comprise preparing a mixture comprising the compounds from compound classes I and II.

5. Process according to at least one of Claims 1 to 4, **characterized in that** the proportion of compounds from compound class I based on the sum of the employed compounds from compound classes I, II, and III is from 0.1 to 50.0 wt%.

6. Process according to at least one of Claims 1 to 5, **characterized in that** an amount of compounds of compound class III is employed such that the preparation has an olefinic unsaturation content, determined according to the method stated in the description, of at least 0.05 g of iodine/100 g of preparation, corresponding to at least 0.002 meq/g.

7. Process according to at least one of Claims 1 to 6, **characterized in that** it employs as compounds from compound class II compounds of formula (IV)
A[-O-(CH₂-CHR'-O-)ₘ-(CH₂-CH₂-O-)ₙ--(CH₂-CH(CH₃)-O-)ₒ-Z]ₐ (IV)
where
A is either hydrogen or an at least one carbon atom-comprising saturated or unsaturated organic radical, preferably an at least one carbon atom-comprising organic radical of an organic starter compound for preparing the compound,
R' is independently at each occurrence a saturated 2-18 carbon atom-comprising alkyl group or an aromatic radical, preferably an ethyl group or a phenyl radical respectively,
Z is either hydrogen, a linear or branched, saturated or unsaturated 1-18 carbon atom-comprising hydrocarbon radical, preferably a methyl, ethyl, propyl, butyl, vinyl or allyl group, or
the radical of an organic acid of formula -C(=O)-Z_{E}, where Z_{E} is an organic radical, preferably a linear or branched, saturated or unsaturated 1 to 17 carbon atom-comprising hydrocarbon radical, preferably a methyl group, or an aromatic 6 to 20 carbon atom-comprising hydrocarbon radical, preferably a phenyl radical, or
the radical of formula -C(=O)-O-Z_{C}, where Z_{C} is an organic radical, preferably a linear or branched, saturated or unsaturated 1 to 18 carbon atom-comprising hydrocarbon radical, preferably a methyl group, ethyl group, or an aromatic 6 to 20 carbon atom-comprising hydrocarbon radical, preferably a phenyl radical,
m equals 0 to 50, preferably 0 to 30, more preferably 0 to 20,
n equals 0 to 250, preferably 3 to 220, more preferably 5 to 200,
o equals 0 to 250, preferably 3 to 220, more preferably 5 to 200,
a equals 1 to 8, preferably more than 1 to 6, more preferably 1, 2, 3 or 4,
with the proviso that m, n and o sum to no less than 1.

8. Process according to at least one of Claims 1 to 7, **characterized in that** it employs as compounds from compound class III olefins comprising 2 to 6 carbon atoms, preferably ethene.

9. Process according to at least one of Claims 1 to 8, **characterized in that** it employs compounds from compound class II having a weight-average molar mass, determined according to the method stated in the description, of from 76 to 10 000 g/mol, preferably from 100 to 8000 g/mol and more preferably from 200 to 6000 g/mol.

10. Process according to one of Claims 1 to 9, **characterized in that** it employs as compounds from compound class II compounds derived from a compound of formula (VI)
A[-OH]ₐ (VI)
where the radical A derives from compounds selected from the group consisting of mono- and polyfunctional monomeric, oligomeric and polymeric alcohols, phenols, carbohydrates and carbohydrate derivatives.

11. Process according to Claim 10, **characterized in that** the radical A derives from one or more alcohols from the group of butanol, 1-hexenol, octanol, dodecanol, stearyl alcohol, vinyloxybutanol, 2-ethylhexanol, cyclohexanol, benzyl alcohol, ethylene glycol, propylene glycol, di-, tri- and polyethylene glycol, 1,2-propylene glycol, di- and polypropylene glycol, 1,4-butanediol, 1,6-hexanediol, trimethylolpropane, glycerol, pentaerythritol, allyl alcohol, vinyl alcohol, sorbitol or from hydroxyl group-bearing compounds based on natural products.

12. Process according to at least one of Claims 1 to 11, **characterized in that** it employs as compounds from compound class I cis-(NH₃)₂PtCl₂ or di-µ-chlorobis(1,2-η)cyclohexeneplatinum(II) chloride.

13. Preparation comprising one or more platinum(II) compounds as compound(s) from compound class IV and one or more compounds comprising carbon atoms, hydrogen atoms and at least two oxygen atoms and optionally one or more olefinic unsaturations as compound(s) from compound class II, and one or more olefinically unsaturated compound(s) comprising at least one olefinic unsaturation and fewer than two oxygen atoms as compound(s) from compound class III, **characterized in that** it comprises as compound(s) from compound class IV platinum complex compounds of formula (X)
[olefin1]ₓ[olefin2]_{y} Pt²⁺ Hal⁻₂,
where
Hal = F, Cl, Br or I,
x = 1 or 2,
y = 0 or 1,
olefin1 = compound comprising at least one olefinic unsaturation and preferably no silicon atom,
olefin2 = compound comprising an olefinic unsaturation and preferably no silicon atom,
with the proviso that when olefin1 comprises at least two olefinic unsaturations x = 1 and x + y = 1 and when olefin1 comprises only one olefinic unsaturation x + y = 2,
produced according to a process according to at least one of Claims 1 to 12,
in each case with the proviso that the total molar amount of olefinic unsaturations is 2 to 200 times the total molar amount of platinum present in the preparation.

14. Use of a preparation according to Claim 13, preferably as catalyst in a process where compounds comprising H-Si groups are reacted with compounds comprising olefinic double bonds.

15. Use according to Claim 14, **characterized in that** the H-Si group-bearing compounds employed in the process are
- monomeric silanes, for example R₃SiH; R₂SiH₂; RSiH₃;
- cyclic silanes, for example (RHSiO)₄; (RHSiO)₃;
- linear or branched oligomeric or polymeric siloxanes such as
R₃SiO-(R₂SiO-)ₐ(RSi(H)O-)_{b}SiR₃, where a ≥ 0 and b ≥ 1; HR₂SiO-(R₂SiO-)_{c}(RSi(H)O-)_{d}SiR₂H, where c and d ≥ 0; compounds of general formula (III) 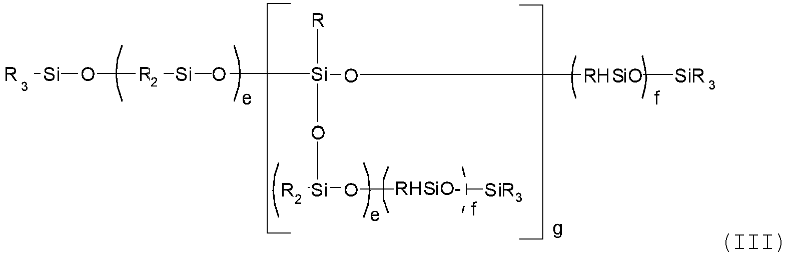 where
e = ≥ 0,
f = ≥ 1 and
g = ≥ 1,
R are identical or different groups that do not impede the addition reaction, such as 1 to 8 carbon atom-comprising alkyl groups; substituted 1 to 8 carbon atom-comprising alkyl groups, such as a 3-chloropropyl group, 1-chloromethyl group, 3-cyanopropyl group; aryl groups, such as a phenyl group; aralkyl groups, such as a benzyl group; alkoxy or alkoxyalkyl groups, such as an ethoxy or ethoxypropyl group and the compounds comprising olefinic double bonds are compounds of formulae
CH₂=CH-CH₂-O-(CH₂-CH₂O-)ₓ-CH₂-CH(R")O-)_{y}-(SO)_{z}-R'"
CH₂=CH-O-(CH₂-CH₂O-)ₓ-CH₂-CH(R")O-)_{y}-R'"
CH₂=CH-CH₂-R^{IV}
CH₂=CH-(O)_{x'}-R^{IV}
where
x = 0 to 100,
x' = 0 or 1,
y = 0 to 100,
z = 0 to 100,
R" is an optionally substituted 1 to 4 carbon atom-comprising alkyl group and
R'" is a hydrogen radical or a 1 to 4 carbon atom-comprising alkyl group; the group -C(O)-R^{V} where R^{V} = alkyl radical; the group -CH₂-O-R"; an alkylaryl group, such as a benzyl group; the group -C(O)NH-R",
R^{IV} is an optionally substituted hydrocarbon radical comprising from 7 to 47, preferably from 13 to 37, carbon atoms, SO is the radical C₆H₅-CH(-)-CH₂-O- (styrene oxide radical).

16. Use according to Claim 14 or 15, **characterized in that** it comprises adding an amount of the preparation to the reaction mixture such that the total concentration of platinum is from 1 to 100 wppm based on the reaction mixture.

## Revendications

1. Procédé pour la production de préparations contenant un ou plusieurs composés à base de complexes de platine mononucléaires de formule (X)
[oléfine1]ₓ[oléfine2]_{y}Pt²⁺ Hal⁻₂
dans laquelle
Hal = F, Cl, Br ou I,
x = 1 ou 2,
y = 0 ou 1,
oléfine1 = composé qui comporte au moins une insaturation oléfinique et moins de deux atomes d'oxygène,
oléfine2 = composé qui comporte une insaturation oléfinique et moins de deux atomes d'oxygène,
et étant entendu que lorsque oléfine1 comporte au moins deux insaturations oléfiniques x est égal à 1 et la somme x + y est égale à 1 et lorsque oléfine1 ne comporte qu'une insaturation oléfinique la somme x + y est égale à 2,
un ou plusieurs composés qui comportent des atomes de carbone, des atomes d'hydrogène et au moins deux atomes d'oxygène, en tant que composé(s) de la classe de composés II,
et un ou plusieurs composé(s) à insaturation oléfinique, choisis parmi oléfine1 et oléfine2, en tant que composé(s) de la classe de composés III,
par mise en contact de chaque fois au moins un composé des classes de composés II et III avec un ou plusieurs composé (s) de platine (II) à deux noyaux en tant que composé(s) de la classe de composés I, **caractérisé en ce que** pour la production de la préparation on produit dans une première étape un mélange par réunion d'au moins deux composés qui sont choisis dans deux classes de composés différentes et dans une étape subséquente on ajoute au mélange obtenu dans la première étape un ou plusieurs composés de la classe de composés encore absente.

2. Procédé selon la revendication 1, **caractérisé en ce que** pour la production de la préparation on produit dans une première étape un mélange de composés des classes de composés I et III et dans une étape subséquente on ajoute au mélange obtenu dans la première étape un(des) composé(s) de la classe de composés II.

3. Procédé selon la revendication 1, **caractérisé en ce que** pour la production de la préparation on produit dans une première étape un mélange de composés des classes de composés II et III et dans une étape subséquente on ajoute au mélange obtenu dans la première étape un(des) composé(s) de la classe de composés I.

4. Procédé selon au moins l'une quelconque des revendications 1 à 3, **caractérisé en ce que** dans la première étape on ne produit pas de mélange qui contient les composés des classes de composés I et II.

5. Procédé selon au moins l'une quelconque des revendications 1 à 4, **caractérisé en ce que** la proportion des composés de la classe de composés I, par rapport à la somme des composés utilisés des classes de composés I, II et III, vaut de 0,1 à 50,0 % en poids.

6. Procédé selon au moins l'une quelconque des revendications 1 à 5, **caractérisé en ce qu'**on utilise une quantité de composés de la classe de composés III telle que la préparation présente une teneur en insaturation oléfinique, déterminée conformément à la méthode indiquée dans la description, d'au moins 0,05 g d'iode/100 g de préparation, correspondant à au moins 0,002 mEq/g.

7. Procédé selon au moins l'une quelconque des revendications 1 à 6, **caractérisé en ce qu'**en tant que composés de la classe de composés II on utilise ceux de formule (IV)
A[-O-(CH₂-CHR'-O-)ₘ-(CH₂-CH₂-O)ₙ-(CH₂-CH(CH₃)-O)ₒ-Z]ₐ (IV)
dans laquelle
A est soit un atome d'hydrogène, soit un radical organique saturé ou insaturé comportant au moins un atome de carbone, de préférence un radical organique, comportant au moins atome de carbone, d'un composé organique de départ destiné à la préparation du composé, R' est chaque fois indépendamment un groupe alkyle saturé ayant 2-18 atomes de carbone ou un radical aromatique, et de préférence un groupe éthyle ou un radical phényle,
Z est soit un atome d'hydrogène, soit un radical hydrocarboné linéaire ou ramifié, saturé ou insaturé, ayant 1-18 atomes de carbone, de préférence un groupe méthyle, éthyle, propyle, butyle, vinyle ou allyle, ou le reste d'un acide organique de formule -C(=O)-Z_{E}, Z_{E} étant un radical organique, de préférence un radical hydrocarboné linéaire ou ramifié, saturé ou insaturé ayant de 1 à 17 atomes de carbone, de préférence un groupe méthyle, ou un radical hydrocarboné aromatique ayant de 6 à 20 atomes de carbone, de préférence un radical phényle, ou
est le radical de formule -C(=O)-O-Z_{c}, Z_{c} étant un radical organique, de préférence un radical hydrocarboné linéaire ou ramifié, saturé ou insaturé, ayant de 1 à 18 atomes de carbone, de préférence un groupe méthyle, éthyle, ou un radical hydrocarboné aromatique ayant de 6 à 20 atomes de carbone, de préférence un radical phényle,
m vaut de 0 à 50, de préférence de 0 à 30, de façon particulièrement préférée de 0 à 20
n vaut de 0 à 250, de préférence de 3 à 220, de façon particulièrement préférée de 5 à 200
o vaut de 0 à 250, de préférence de 3 à 220, de façon particulièrement préférée de 5 à 200 a vaut de 1 à 8, de préférence de plus de 1 à 6, de façon particulièrement préférée 1, 2, 3 ou 4,
étant entendu que la somme de m, n et o est égale ou supérieure à 1.

8. Procédé selon au moins l'une quelconque des revendications 1 à 7, **caractérisé en ce qu'**on utilise en tant que composés de la classe de composés III des oléfines ayant de 2 à 6 atomes de carbone, de préférence l'éthène.

9. Procédé selon au moins l'une quelconque des revendications 1 à 8, **caractérisé en ce qu'**on utilise en tant que composés de la classe de composés II ceux qui présentent une masse molaire moyenne en poids, déterminée conformément à la méthode indiquée dans la description, de 76 à 10 000 g/mole, de préférence de 100 à 8 000 g/mole et de façon particulièrement préférée de 200 à 6 000 g/mole.

10. Procédé selon l'une quelconque des revendications 1 à 9, **caractérisé en ce qu'**on utilise en tant que composés de la classe de composés II les composés qui sont issus d'un composé de formule (VI)
A[-OH]ₐ (VI),
le radical A dérivant de composés qui sont choisis dans le groupe des alcools, phénols, glucides ou dérivés de glucides monomères, oligomères ou polymères, mono- ou plurivalents.

11. Procédé selon la revendication 10, **caractérisé en ce que** le radical A dérive d'un ou de plusieurs alcools du groupe constitué par le butanol, le 1-hexénol, l'octanol, le dodécanol, l'alcool stéarylique, le vinyloxybutanol, le 2-éthylhexanol, le cyclohexanol, l'alcool benzylique, l'éthylèneglycol, le propylèneglycol, le di-, le tri- et le polyéthylèneglycol, le 1,2-propylèneglycol, le di- et le polypropylèneglycol, le 1,4-butanediol, le 1,6-hexanediol, le triméthylolpropane, le glycérol, le pentaérythritol, l'alcool allylique, l'alcool vinylique, le sorbitol ou de composés portant des groupes hydroxy, à base de substances naturelles.

12. Procédé selon au moins l'une quelconque des revendications 1 à 11, **caractérisé en ce qu'**on utilise en tant que composés de la classe de composés I du cis-(NH₃)₂PtCl₂ ou du chlorure de di-p-chlorobis(1,2-n)-cyclohexèneplatine(II) .

13. Préparation, qui contient un ou plusieurs composés de platine (II), en tant que composé (s) de la classe de composés IV, et un ou plusieurs composés qui comportent des atomes de carbone, des atomes d'hydrogène et au moins deux atomes d'oxygène et éventuellement une ou plusieurs instaurations oléfiniques, en tant que composé(s) de la classe de composés II, et un ou plusieurs composé(s) à insaturation oléfinique qui comportent au moins une insaturation oléfinique et moins de deux atomes d'oxygène, en tant que composé(s) de la classe de composés III, **caractérisée en ce qu'**en tant que composé (s) de la classe de composés IV sont contenus des composés à base de complexes de platine de formule (X)
[oléfine1]ₓ[oléfine2]_{y}Pt²⁺ Hal⁻₂
dans laquelle
Hal = F, Cl, Br ou I,
x = 1 ou 2,
y = 0 ou 1,
oléfine1 = composé qui comporte au moins une insaturation oléfinique et de préférence ne comporte aucun atome de silicium,
oléfine2 = composé qui comporte une insaturation oléfinique et de préférence ne comporte aucun atome de silicium,
étant entendu que lorsque oléfine1 comporte au moins deux insaturations oléfiniques x est égal à 1 et la somme x + y est égale à 1 et lorsque oléfine1 ne comporte qu'une insaturation oléfinique la somme x + y est égale à 2,
préparés conformément à un procédé selon au moins l'une quelconque des revendications 1 à 12,
étant chaque fois entendu que la quantité molaire totale d'insaturations oléfiniques vaut de 2 à 200 fois la quantité molaire totale de platine contenue dans la préparation.

14. Utilisation d'une préparation selon la revendication 13, de préférence en tant que catalyseur, dans un procédé dans lequel on fait réagir des composés comportant des groupes H-Si avec des composés qui comportent des doubles liaisons oléfiniques.

15. Utilisation selon la revendication 14, **caractérisée en ce que** dans le procédé on utilise en tant que composés portant des groupes H-Si
- des silanes monomères, comme par exemple R₃SiH ; R₂SiH₂ ; RSiH₃ ;
- des silanes cycliques, comme par exemple (RHSiO)₄ ; (RHSiO)₃ ;
- des siloxanes linéaires ou ramifiés, oligomères ou polymères, tels que
R₃SiO-(R₂SiO-)ₐ(RSi(H)O-)_{b}SiR₃, a étant ≥ 0 et b ≥ 1 ; HR₂SiO-(R₂SiO-)_{c}(RSi(H)O-)_{d}SiR₂H, c et d étant ≥ O ;
des composés de formule générale (III) 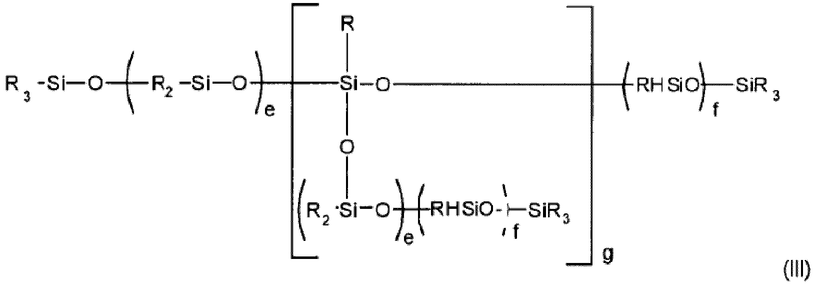 dans laquelle
e est ≥ 0,
f est ≥ 1 et
g est ≥ 1,
R sont des groupes identiques ou différents, qui ne gênent pas la réaction de fixation par addition, tels que des groupes alkyle ayant de 1 à 8 atomes de carbone, des groupes alkyle substitués ayant de 1 à 8 atomes de carbone, tels que le groupe 3-chloropropyle, 1-chloro-méthyle, 3-cyanopropyle ; des groupes aryle, tels que le groupe phényle ; des groupes aralkyle, tels que le groupe benzyle ; des groupes alcoxy ou alcoxyalkyle, tels que le groupe éthoxy ou éthoxypropyle, et en tant que composés comportant des doubles liaisons oléfiniques des composés de formules
CH₂=CH-CH₂-O-(CH₂-CH₂O-)ₓ-CH₂-CH(R")O-)_{y}-(SO)_{z}-R"'
CH₂=CH-O-(CH₂-CH₂O-)ₓ-CH₂-CH(R")O-)_{y}-R'"
CH₂=CH-CH₂-R^{IV}
CH₂=CH-(O)_{x'}-R^{IV}
où
x = 0 à 100,
x' = 0 ou 1,
y = 0 à 100,
z = 0 à 100,
R" est un groupe alkyle éventuellement substitué ayant de 1 à 4 atomes de carbone et
R'" représente un atome d'hydrogène ou un groupe alkyle ayant de 1 à 4 atomes de carbone ; le groupe -C(O)-R^{V} où R^{V} = radical alkyle ;
le groupe -CH₂-O-R" ; un groupe alkylaryle, tel que le groupe benzyle ; le groupe -C(O)NH-R",
R^{IV} représente un radical hydrocarboné éventuellement substitué ayant de 7 à 47, de préférence 13 à 37 atomes de carbone,
SO représente le radical C₆H₅-CH(-)-CH₂-O- (radical oxystyrène).

16. Utilisation selon la revendication 14 ou 15, **caractérisée en ce qu'**on ajoute au mélange réactionnel une quantité suffisante de la préparation pour que la concentration totale de platine vaille de 1 à 100 ppm en poids par rapport au mélange réactionnel.
